# EUROPEAN PATENT APPLICATION

(11) **EP 2 757 404 A1**
(43) Date of publication of application: **23.07.2014**
(21) Application number: 13197181.4
(22) Date of filing: 13.12.2013
(51) Int. Cl.: G02B 26/08, G02B 26/10

(54) **Vibrating mirror element and electronic device having a projector function**

(30) Priority: 17.01.2013 JP 2013005868
(71) Applicant: Funai Electric Co., Ltd., Daito city Osaka 574-0013 (JP)
(72) Inventor: Murayama, Manabu, Osaka, Osaka 574-0013 (JP)
(74) Representative: Osha Liang SARL

(57) **Abstract**

A vibrating mirror element (1; 201; 301; 401; 501) includes a mirror portion (11; 511) that reflects light and is tiltable around a rotational axis (A), a tiltable frame portion (12, 13; 212; 512, 513) connected to a mirror end portion (11a, 11b; 511c, 511d, 511e, 511f) of the mirror portion (11; 511) at a position on an intersecting line (B; D, E) that intersects with the rotational axis (A), a driving portion (16, 17; 216, 217) including a piezoelectric element (3b) configured to deform through application of a voltage, and a connecting portion (14, 15; 214, 215; 314, 315) configured to connect the tiltable frame portion (12, 13; 212; 512, 513) and the driving portion (16, 17; 216, 217) and tiltable through deformation of the piezoelectric element (3b) of the driving portion (16, 17; 216, 217). The tiltable frame portion (12, 13; 212; 512, 513) can be tilted by tilting the connecting portion (14, 15; 214, 215; 314, 315), and the mirror portion (11; 511) can be tilted by tilting the tiltable frame portion (12, 13; 212; 512, 513).

## Description

### [Field of Technology]

The present invention relates generally to a vibrating mirror element and an electronic device having a projector function, e.g., a vibrating mirror element provided with a mirror portion for reflecting light and an electronic device that has a projector function and provided with that vibrating mirror element.

### [Background Art]

Conventional vibrating mirror elements are provided with a mirror portion for reflecting light (referencing, for example, Cited Document 1).

Patent Citation 1 discloses an optical scanning device comprising a movable plate (a mirror portion) having a reflecting face for reflecting light, a pair of torsion bars that axially support the movable plate so as to enable rotation as the rotational axis of the movable plate, and a driving portion for applying a driving force (a torque) in the torsional direction to the pair of torsion bars. Ribs for controlling deformation of the movable plate resulting from the driving force in the torsional direction that is applied to the movable plate from the pair of torsion bars are formed on the movable plate of the optical scanning device. The movable plate and the pair of torsion bars are connected directly on the rotational axis of the movable plate.

### [Patent Citations]

[Patent Document 1] Japanese Unexamined Patent Application Publication 2010-128116

However, because, in the optical scanning device of Patent Citation 1, the movable plate and the pair of torsion bars are connected directly on the rotational axis of the movable plate, the driving force (torque) of the pair of torsion bars in the torsional direction is applied directly to the movable plate. Because of this, despite the ribs on the movable plate, it may not be possible to adequately suppress the deformation of the movable plate (the mirror portion) caused by the application of a relatively large torque to the movable plate.

### [Summary of the Invention]

One or more embodiments of the present invention provide a vibrating mirror element able to adequately suppress deformation of the mirror portion, and an electronic device having a projector function, provided with the vibrating mirror element.

A vibrating mirror element according to one or more embodiments of the present invention may comprise: a mirror portion that reflects light and is tiltable around a rotational axis, a tiltable frame portion connected to a mirror end portion of the mirror portion at a position on an intersecting line that intersects with the rotational axis, a driving portion including a piezoelectric element configured to deform through application of a voltage, and a connecting portion configured to connect the tiltable frame portion and the driving portion and tiltable through deformation of the piezoelectric element of the driving portion. The tiltable frame portion can be tilted by tilting the connecting portion, and the mirror portion can be tilted by tilting the tiltable frame portion. According to one or more embodiments, the mirror portion may comprise a mirror. According to one or more embodiments, the tiltable frame portion may comprise a tiltable frame. According to one or more embodiments, the tiltable frame portion may comprise a pair of frame portions connected respectively to end portions of the mirror portion. According to one or more embodiments, the driving portion may comprise a driving circuit including a piezoelectric element which may be configured to deform through application of a voltage. According to one or more embodiments, the connecting portion may comprise a connector.

According to one or more embodiments of the present invention, the tiltable frame portion connected to a mirror end portion of a mirror portion positioned on an intersecting line that intersects with the rotational axis, as described above, may cause the mirror portion and the tiltable frame portion to be connected at a location other than on the rotational axis, making it possible, for example, to reduce the driving force (the torque) in the torsional direction that acts on the mirror end portions when compared to the case wherein the mirror end portions and the tiltable frame portion are connected on the rotational axis. Moreover, according to one or more embodiments, structuring so as to enable tilting of the connecting portion through deforming a piezoelectric element (e.g., crystal) of the driving portion, structuring so as to tilt the tiltable frame portion through tilting the connecting portion, and structuring so as to tilt the mirror portion through tilting the tiltable frame portion, may also enable a reduction in the torque that acts on the mirror end portions, through applying the torque of the connecting portion indirectly to the mirror end portions through the tiltable frame portion, unlike the case of the direct connections between the mirror end portions and the connecting portions. This makes it possible, for example, to suppress fully the deformation of the mirror portion. Moreover, unlike the case wherein ribs are formed in the mirror portion, the thickness of the mirror portion can be made uniform, thus enabling the vibrating mirror element that has the mirror portion to be fabricated easily.

According to one or more embodiments, the tiltable frame portion may be connected to the mirror end portion at a location near a centerline, for example arranged vertically, that intersects perpendicularly with the rotational axis of the mirror portion. This structure may enable the mirror end portions and the tiltable frame portion to be connected at locations that are adequately far from the rotational axis of the mirror portion, making it possible, for example, to further reduce the torque that acts on the mirror end portions. This makes it possible to suppress effectively the deformation of the mirror portion.

According to one or more embodiments, the connecting portion may be connected to the tiltable frame portion near the rotational axis. This structure makes it possible, for example, to transmit the driving force around the rotational axis to the tiltable frame portion easily from the connecting portions, allowing a greater tilt of the tiltable frame portion around the rotational axis. Doing so makes it possible, for example, to increase tilting the mirror portion around the rotational axis.

According to one or more embodiments, the tiltable frame portion may be formed so as to surround a periphery of the mirror portion. This structure makes it possible, for example, to connect the mirror end portions of the mirror portion and the tiltable frame portion easily.

According to one or more embodiments, the mirror portion may be formed in a circular shape, for example in a plan view. According to one or more embodiments, the tiltable frame portion may be formed in a ring shape, for example in the plan view, so as to encompass the periphery of the mirror portion. This structure makes it possible, for example, to connect the tiltable frame portion and the mirror end portions of the circular mirror portion easily.

According to one or more embodiments, the driving portion may comprise a pair of driving portions holding the mirror portion therebetween. According to one or more embodiments, the connecting portion may be configured to connect together first end portions of the pair of driving portions and to connect together second end portions of the pair of driving portions, and may include a pair of connecting bars tiltable by deformation of the pair of driving portions. According to one or more embodiments, the tiltable frame portion may be configured to connect to each of a pair of the mirror end portions of the mirror portion located on a perpendicular centerline intersecting perpendicularly with the rotational axis of the mirror portion, and may be configured to be tiltable by tilting the pair of connecting bars. According to one or more embodiments, the mirror portion may be configured to be tiltable by tilting the tiltable frame portion. This structure makes it possible, for example, to tilt the mirror portion with more stability than in the case wherein only a single driving portion is provided, through the use of a pair of driving portions that are formed so as to hold the mirror portion therebetween. Moreover, connecting the pair of mirror end portions that are positioned on the perpendicular centerline and the tiltable frame portion makes it possible to tilt the mirror portion reliably around the rotational axis.

According to one or more embodiments, the connecting portion may further include a pair of torsion bars formed holding the mirror portion therebetween and capable of undergoing torsional deformation through tilting the pair of connecting bars. According to one or more embodiments, the pair of torsion bars may be to lie on the rotational axis and so that the tiltable frame portion is tiltable through torsional deformation of the pair of torsion bars. This structure makes it possible, for example, to tilt the tiltable frame portion largely around the rotational axis through torsional deformation of the pair of torsion bars, which in turn makes it possible to increase tilting the mirror portion around the rotational axis.

According to one or more embodiments, the driving portion may be arched or bent, for example in a plan view, so that the mirror portion side is concave. This structure makes it possible, for example, to form the driving portion in the vicinity of the mirror portion side, which in turn makes it possible to keep the vibrating mirror element from being larger. Moreover, when compared to the case wherein the driving portion is formed in a straight line, the length of the driving portion can be increased by the amount by which the driving portion is arched or bent, thus enabling the area of the driving portions to be made larger. Doing so can make it easy to increase the driving force produced by the driving portion.

According to one or more embodiments, an electronic device having a projector function may comprise: a laser beam producing portion; a controlling portion configured to analyze an inputted video to recognize pixel information; and a vibrating mirror element configured to scan the laser beam. According to one or more embodiments, the vibrating mirror device may be as described in any of the above-mentioned embodiments. For example, the vibrating mirror element may include: a mirror portion that reflects light and is tiltable around a rotational axis; a tiltable frame portion connected to a mirror end portion of the mirror portion at a position on an intersecting line that intersects with the rotational axis; a driving portion including a piezoelectric element configured to deform through application of a voltage; and a connecting portion configured to connect the tiltable frame portion and the driving portion and tiltable through deformation of the piezoelectric element of the driving portion. The tiltable frame portion can be tilted by tilting the connecting portion, and the mirror portion can be tilted by tilting the tiltable frame portion.

According to one or more embodiments, providing the tiltable frame portion as described above causes the mirror portion and the tiltable frame portion to be connected at a location other than on the rotational axis, thus making it possible, for example, to reduce the driving force (the torque) in the torsional direction that acts on the mirror end portions when compared to the case wherein the mirror end portions and the tiltable frame portion are connected on the rotational axis. Moreover, , structuring the vibrating mirror element so as to enable tilting of the connecting portion through deforming a piezoelectric element (e.g., crystal) of the driving portion, so as to tilt the tiltable frame portion through tilting the connecting portion, and so as to tilt the mirror portion through tilting the tiltable frame portion, may also enable a reduction in the torque that acts on the mirror end portions, through applying the torque of the connecting portion indirectly to the mirror end portions through the tiltable frame portion, unlike the case of the direct connections between the mirror end portions and the connecting portions. This makes it possible, for example, to suppress deformation of the mirror portion, which in turn makes it possible to suppress changes in the width of the laser beam reflected by the mirror portion (which can narrow or expand the laser beam). The result is the ability to scan, by the vibrating mirror element, a laser beam wherein variations in width are suppressed, making it possible for the electronic device to project a sharp projected image. Moreover, unlike the case wherein ribs are formed in the mirror portion of the vibrating mirror element, the thickness of the mirror portion can be made uniform, thus enabling the vibrating mirror element that has the mirror portion to be fabricated easily.

One or more embodiments of the present invention make it possible to thoroughly suppress deformation of the mirror portion, as described above.

### [Brief Descriptions of the Drawings]

FIG. 1 is a block diagram illustrating the structure of a mobile electronic device according to a first embodiment of the present invention.
FIG. 2 is a plan view of a laser scanning portion according to the first embodiment of the present invention.
FIG. 3 is a cross-sectional diagram along the section 600-600 in FIG. 2.
FIG. 4 is an enlarged cross-section of the structure of a driving portion for a laser scanning portion according to the first embodiment of the present invention.
FIG. 5 is a perspective view of the mirror portion of the laser scanning portion which is tilted around the rotational axis in accordance with the first embodiment of the present invention.
FIG. 6 is a plan view of a laser scanning portion according to a second embodiment of the present invention.
FIG. 7 is a perspective view of the mirror portion of the laser scanning portion which is tilted around the rotational axis in accordance with the second embodiment of the present invention.
FIG. 8 is a plan view of a laser scanning portion according to a modified example of the second embodiment of the present invention.
FIG. 9 is a perspective view of the mirror portion of the laser scanning portion which is tilted around the rotational axis in accordance with the modified example of the second embodiment of the present invention.
FIG. 10 is a plan view of a laser scanning portion according to a third embodiment of the present invention.
FIG. 11 is a plan view of a laser scanning portion according to a modified example of the present invention.

### [Detailed Description of the Embodiments of the Invention]

### (First Embodiment)

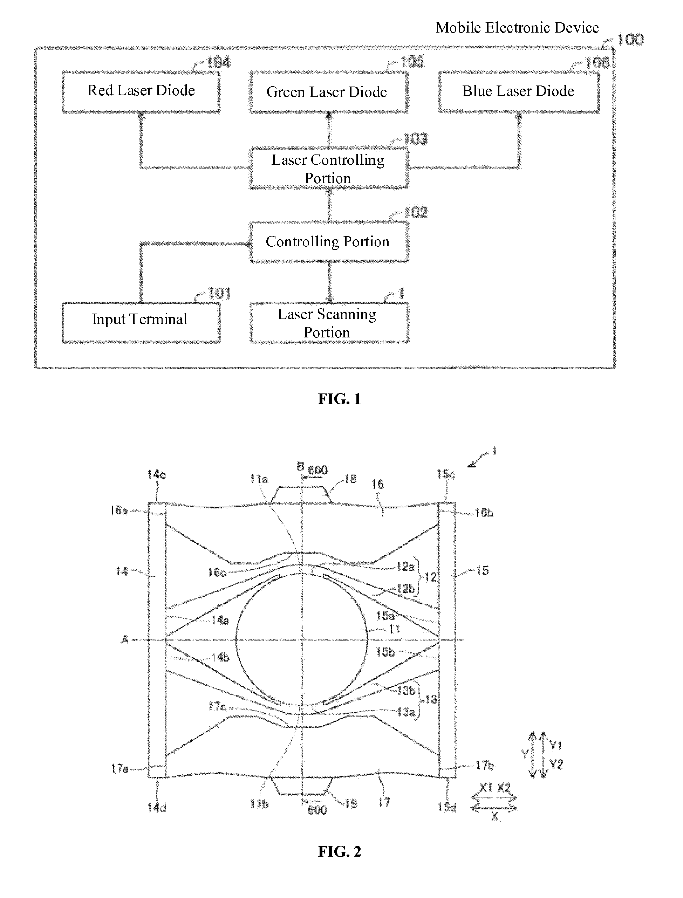

The structure of a mobile electronic device 100 according to a first embodiment of the present invention will be explained first in reference to FIG. 1 through FIG. 4. The mobile electronic device 100 is an example of an "electronic device having a projector function" according to one or more embodiments of the present invention.

The mobile electronic device 100 according to a first embodiment of the present invention, as illustrated in FIG. 1, may comprise: an input terminal 101 for inputting a video signal from the outside; a controlling portion 102 for analyzing the video signal inputted from the input terminal 101, to identify pixel information; a laser controlling portion 103 for outputting pixel information as video; a red laser diode 104; a green laser diode 105; a blue laser diode 106; and a laser scanning portion 1. That is, the mobile electronic device 100 may have a projector function able to output, as video, video information inputted. The red laser diode 104, the green laser diode 105, and the blue laser diode 106 are an example of a "laser light producing portion" according to one or more embodiments of the present invention, and the laser scanning portion 1 is an example of a "vibrating mirror element" according to one or more embodiments of the present invention.

Moreover, the laser controlling portion 103 may be structured so as to control the emission of light from the red laser diode 104, the green laser diode 105, and the blue laser diode 106 based on pixel information that is recognized by the controlling portion 102. Moreover, the red laser diode 104 may be structured so as to enable the emission of a red laser beam, the green laser diode 105 may be structured so as to enable the emission of a green laser beam, and the blue laser diode 106 may be structured so as to enable the emission of a blue laser beam. Moreover, the laser scanning portion 1 may be structured so as to project video onto a specific projection location by reflecting the laser beams from the red laser diode 104, the green laser diode 105, and the blue laser diode 106.

The laser scanning portion 1, as illustrated in FIG. 2, may include: a mirror portion 11; frame portions 12 and 13 connected respectively to end portions 11a and 11b of the mirror portion 11; connecting bars 14 and 15 connected to the frame portions 12 and 13; driving portions 16 and 17 connected to connecting bars 14 and 15; and securing portions 18 and 19. The connecting bars 14 and 15 are an example of the "connecting portions" according to one or more embodiments of the present invention.

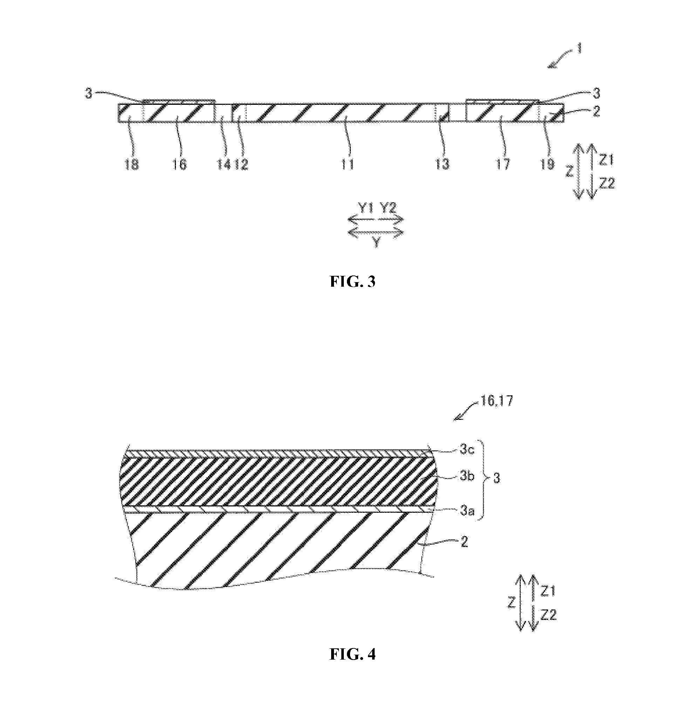

Moreover, the laser scanning portion 1 may be structured so as to be essentially linearly symmetrical on the rotational axis A of the mirror portion 11 and on a perpendicular centerline B perpendicular to the rotational axis A. The perpendicular centerline B may extend through the center of the mirror portion 11. Moreover, as illustrated in FIG. 3, the mirror portion 11, the frame portions 12 and 13, the connecting bars 14 and 15 (referencing FIG. 2), the driving portions 16 and 17, and the securing portions 18 and 19 may be formed integrally from a base material 2, for example made out of Si, SUS, or Ti, either singly or in a material that is a composite thereof. In FIG. 3 the length of the laser scanning portion 1 in the thickness direction (the Z direction) is exaggerated. The perpendicular centerline B is an example of an "intersecting line" according to one or more embodiments of the present invention.

As is illustrated in FIG. 2, the mirror portion 11 may be formed in a circular shape, in the plan view, so as to be located with the center thereof at essentially the center portion of the laser scanning portion 1, and so as to be able to tilt around the rotational axis A. Moreover, in the mirror portion 11, the frame portion 12 and the end portion 11a, which may be located on the perpendicular centerline B, may be connected on one side (the Y1 side) in the perpendicular line direction (the Y direction) perpendicular to the rotational axial direction (the X direction) of the mirror portion 11, and the frame portion 13 and the end portion 11b, which may be located on the perpendicular centerline B, may be connected at the other side (the Y2 side) in the Y direction. Moreover, the mirror portion 11 may have the function of reflecting the laser beams from the red laser diode 104, the green laser diode 105, and the blue laser diode 106 (referencing FIG. 1). The end portions 11a and 11b are an example of "mirror end portions" according to one or more embodiments of the present invention.

Because the frame portions 12 and 13 are formed respectively on the Y1 side and the Y2 side, they may be formed so as to hold the mirror portion 11 therebetween. Moreover, the frame portions 12 and 13 may be structured so as to enable tilting and so as to enable torsional deformation.

Moreover, the frame portion 12 on the Y1 side may have a connecting portion 12a connected to the end portion 11a of the mirror portion 11 on the Y1 side, and a bar portion 12b connected to the connecting portion 12a. Moreover, the frame portion 13 on the Y2 side may have a connecting portion 13a connected to the end portion 11b of the mirror portion 11 on the Y2 side, and a bar portion 13b connected to the connecting portion 13a. The connecting portions 12a and 13a may both be formed on the perpendicular centerline B perpendicular to the rotational axis A, and may be respectively connected to the end portions 11a and 11b on the mirror portion 11 on the perpendicular centerline B.

The bar portions 12b and 13b may be formed so as to extend in the X direction on the Y1 side and the Y2 side, respectively, of the mirror portion 11. At this time, the bar portion 12b may be formed in an arc so as to be concave on the mirror portion 11 side (the Y2 side) along the outside face of the mirror portion 11, and the bar portion 13b may be formed in an arc so as to be concave on the mirror portion 11 side (the Y1 side) along the outside face of the mirror portion 11.

Moreover, the bar portions 12b and 13b may be connected to a connecting bar 14 on the X1 side at the end portion on one side (the X1 side) in the rotational axial direction (the X direction) of the mirror portion 11 and connected to a connecting bar 15 on the X2 side at the end portion on the other side (the X2 side) in the X direction. That is, the bar portion 12b may be connected to the connecting bar 14 and the connecting bar 15 on the Y1 side of the mirror portion 11, and the bar portion 13b may be connected to the connecting bar 14 and the connecting bar 15 on the Y2 side of the mirror portion 11. Moreover, the bar portions 12b and 13b may be, respectively, connected to the connecting portions 12a and 13a at the center portion in the X direction. Moreover, the bar portions 12b and 13b may be formed so that the widths thereof are thinner toward the center portion in the X direction than the end portions in the X direction.

Because the connecting bars 14 and 15 may be formed respectively on the X1 side and the X2 side, they may be formed so that the mirror portion 11 is held therebetween. Moreover, the connecting bars 14 and 15 may be formed so as to extend in a straight line along the Y direction, and may be structured so as to enable tilting.

Moreover, the connecting bars 14 and 15 may be connected to the frame portions 12 and 13, respectively, in the vicinity of the Y-direction center portion at locations on the rotational axis A. Specifically, the connecting bar 14 may be connected to the bar portion 12b at the connecting part 14a positioned toward the Y1 side from the center portion, and may be connected to the bar portion 13b in the connecting part 14b located toward the Y2 side of the center portion. The connecting parts 14a and 14b may be formed on the outside face of the mirror portion 11 side (the X2 side) of the connecting bar 14. Moreover, the connecting bar 15 may be connected to the bar portion 12b at the connecting part 15a positioned toward the Y1 side from the center portion, and may be connected to the bar portion 13b in the connecting part 15b located toward the Y2 side of the center portion. The connecting parts 15a and 15b may be formed on the outside face of the mirror portion 11 side (the X1 side) of the connecting bar 15.

Moreover, the X1 side connecting bar 14 may be connected to the end portion 16a of the driving portion 16 on the Y1 side in the vicinity of the end portion 14c on the Y1 side and the end portion 17a of the Y2 side driving portion 17 may be connected in the vicinity of the end portion 14d on the Y2 side. Moreover, the X2 side connecting bar 15 may be connected to the end portion 16b of the driving portion 16 in the vicinity of the end portion 15c on the Y1 side and the end portion 17b of the driving portion 17 may be connected in the vicinity of the end portion 15d on the Y2 side. Furthermore, the connecting bar 14 may be connected to the driving portions 16 and 17 on the side faces on the driving portions 16 and 17 side (the X2 side), and the connecting bar 15 may be connected to the driving portions 16 and 17 on the side faces on the driving portions 16 and 17 side (the X1 side). As a result, the driving portions 16 and 17 may be connected together through the connecting bar 14 on the X1 side, and connected together by the connecting bar 15 on the X2 side. The end portions 16a and 17a are an example of "first end portions" according to one or more embodiments of the present invention, and the end portions 16b and 17b are an example of "second end portions" according to one or more embodiments of the present invention.

Because the driving portions 16 and 17 may be formed respectively on the Y1 side and the Y2 side in the perpendicular line direction (the Y direction), they may be formed so as to hold the mirror portion 11 therebetween. The driving portions 16 and 17 may be formed so as to be held between the connecting bars 14 and 15 in the X direction. Moreover, the Y1 side driving portion 16 may be formed on the opposite side (the Y1 side) of the mirror portion 11 from the frame portion 12 on the Y1 side, and the Y2 side driving portion 17 may be formed on the opposite side (the Y2 side) of the mirror portion 11 from the frame portion 13 on the Y2 side.

Moreover, the driving portion 16 may be formed so that the width of the driving portion 16 is minimal at the end portions 16a and 16b, and the driving portion 17 may be formed so that the width of the driving portion 17 is minimal at the end portions 17a and 17b.

Moreover, in the center portion in the X direction of the driving portion 16, a concave portion 16c that is concave in the opposite side (the Y1 side) from the mirror portion 11 may be formed, and in the center portion in the X direction of the driving portion 17, a concave portion 17c that is concave in the opposite side (the Y2 side) from the mirror portion 11 may be formed. This makes it possible, for example, to dispose the driving portions 16 and 17 in the vicinity of the mirror portion 11, which in turn makes it possible to keep the laser scanning portion 1 from being large.

Moreover, the driving portions 16 and 17 may have driving mechanism portions 3 formed on the top face (the face on the Z1 side) of a substrate 2, as illustrated in FIG. 3 and FIG. 4. The driving mechanism portion 3 may have a structure wherein a bottom electrode 3a, a piezoelectric element 3b made from lead zirconium titanate (PZT), and a top electrode 3c are layered sequentially from the bottom (the Z2 side), as illustrated in FIG. 4. Moreover, the driving mechanism portion 3 may be structured so that the piezoelectric element 3b undergoes torsional deformation (twisting) in a convex shape or a concave shape in the vertical direction (the Z direction) through the application of a voltage to the piezoelectric element 3b through producing a potential difference between the bottom electrode 3a and the top electrode 3c. The result is that the driving portions 16 and 17 may be structured so as to bend and deform in a convex shape or a concave shape in the Z direction with the center portion in the X direction as the stationary end and both end portions in the X direction (the end portions 16a, 16b, 17a, and 17b) as free ends.

Moreover, the structure may be such that sine wave voltages of opposite phases are applied to the driving portion 16 and the driving portion 17. That is, when the driving portion 16 or 17 bends and deforms in the convex direction, the other bends and deforms in the concave direction. Moreover, the structure may be such that the driving portions 16 and 17 repetitively alternatingly bend and deform to the convex shape and bend and deform to the concave shape at a driving frequency of, for example, about 30 kHz, and the size, and the like, of the mirror portion 11 of the laser scanning portion 1 are designed so as to match this driving frequency. Doing so causes the mirror portion 11 to be caused to resonate, by the driving portions 16 and 17, enabling reciprocation (continuous tilting) of the mirror portion 11 around the rotational axis A (referencing FIG. 2) at a vibrating angle larger than the vibrating angle of an ordinary tilting. The specific tilting behavior of the mirror portion 11 will be described below.

The securing portions 18 and 19 may be provided in order to secure the respective driving portions 16 and 17 to a stationary frame, not shown. Moreover, as illustrated in FIG. 2, the securing portion 18 may be connected at the center portion of the driving portion 16 in the X direction and on the side face on the opposite side (the Y1 side) from the mirror portion 11, and a securing portion 19 may be connected at the center portion of the driving portion 17 in the X direction and on the side face on the opposite side (the Y2 side) from the mirror portion 11. Moreover, the structure is such that the X direction center portions of the driving portions 16 and 17 may be formed into stationary ends by the securing portions 18 and 19.

Examples of the reciprocating action of the mirror portion 11 in the laser scanning portion 1 of the first embodiment of the present invention, and the scanning action of the laser beam due to the laser scanning portion 1, will be explained next in reference to FIG. 1, FIG. 2, FIG. 4, and FIG. 5.

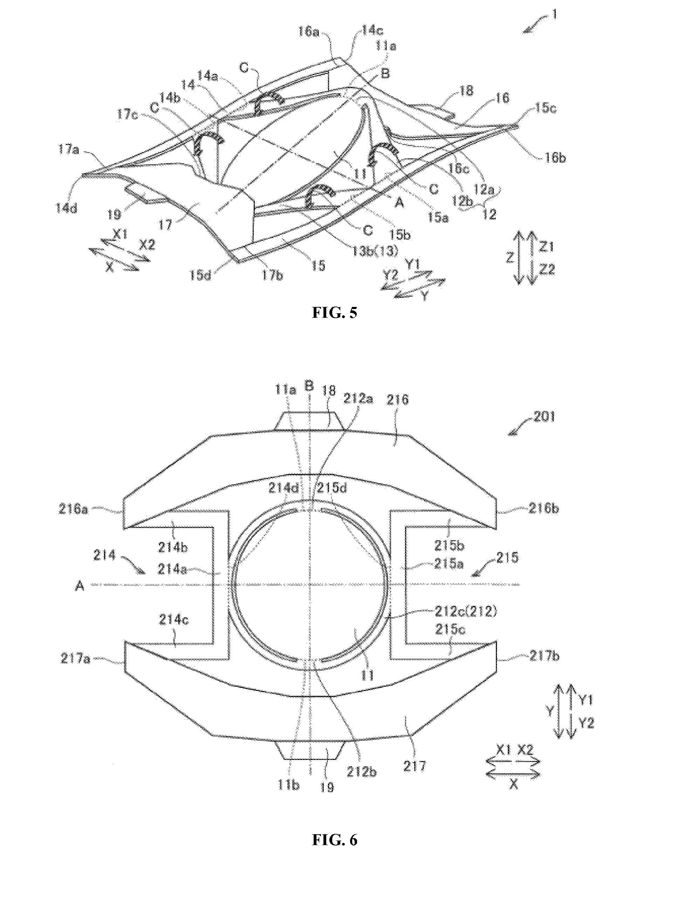

As illustrated in FIG. 5, when the piezoelectric element 3b (referencing FIG. 4) of the driving portion 16 on the Y1 side deforms to bend in the concave direction, and the piezoelectric element 3b of the driving portion 17 on the Y2 side deforms to bend in the convex direction, the end portions 16a and 16b of the driving portion 16 on the Y1 side may be both dislocated upward (toward the Z1 side), and the end portions 17a and 17b of the driving portion 17 on the Y2 side may be both dislocated downward (toward the Z2 side). The end portions 16a and 16b being positioned thereby above the end portions 17a and 17b may cause the connecting bars 14 and 15, which may be connected to the driving portions 16 and 17, to both tilt downward from the Y1 side toward the Y2 side. The result is that the bending deformation of the piezoelectric elements 3b of the driving portions 16 and 17 causes the connecting bars 14 and 15 to tilt.

Given this, tilting the connecting bars 14 and 15 downward from the Y1 side towards the Y2 side may cause the connecting bars 14 and 15 to apply a torque C in the torsional direction to the bar portion 12b of the frame portion 12 and the bar portion 13b of the frame portion 13, which may be connected in the vicinity of the rotational axis A. This causes the Y1 side bar portion 12b to tilt and undergo torsional deformation so that the X direction center portion will be located higher than the end portions in the X direction. Moreover, the Y2 side bar portion 13b may tilt and undergo torsional deformation so that the X direction center portion will be located lower than the end portions in the X direction. The result is that the frame portions 12 and 13 may be tilted by tilting the connecting bars 14 and 15.

Here, in the first embodiment, although there is a large torsional deformation, due to the torque from the connecting bars 14 and 15, at the bar portions 12b and 13b in the vicinity of the connecting bars 14 and 15, there is essentially no torsional deformation at the connecting portion 12a of the frame portion 12 and the connecting portion 13a of the frame portion 13 (referencing FIG. 2) that are positioned the furthest away on the rotational axis A. As a result, the end portion 11 a of the mirror portion 11 on the Y1 side, and the end portion 11b on the Y2 side, undergo essentially no torsional deformation, with the result that there is essentially no torque produced that would cause the mirror portion 11 to deform.

Moreover, tilting the bar portions 12b and 13b may cause the connecting portion 12a positioned on the Y1 side and the end portion 11a of the mirror portion 11 to be positioned upward, and the connecting portion 13a positioned on the Y2 side and the end portion 11b of the mirror portion 11 to be positioned downward. The result is that the mirror portion 11 may tilt around the rotational axis A so as to angle downward from the end portion 11a side toward the end portion 11b side, positioned on the perpendicular centerline B. That is, the mirror portion 11 is tilted by tilting the frame portions 12 and 13.

Moreover, when the Y1 side driving portion 16 undergoes convex bending dislocation and the Y2 side driving portion 17 undergoes concave bending deformation, there is also essentially no torque produced that would cause the mirror portion 11 to deform, so that the mirror portion 11 tilts around the rotational axis A so as to angle upward from the end portion 11a side toward the end portion 11b side, located on the perpendicular centerline B.

Additionally, in the driving portions 16 and 17, the convex bending deformation and the concave bending deformation may repeat alternatingly at a driving frequency of approximately 30 kHz, which may be approximately equal to the characteristic vibrational frequency of the laser scanning portion 1 as a whole. As a result, the mirror portion 11, in a resonating state, tilts so as to repetitively alternate upward or downward from the end portion 11a side toward the end portion 11b side, located on the perpendicular centerline B. The result is that the mirror portion 11 reciprocates (continuously tilts) around the rotational axis A with a vibrational angle larger than the vibrational angle in a normal tilt.

As a result, the laser beams from the red laser diode 104, the green laser diode 105, and the blue laser diode 106 (referencing FIG. 1) may be reflected at the reciprocating mirror portion 11, so that, in the mobile electronic device 100 (referencing FIG. 1), the laser beam will be scanned in one axial direction at a driving frequency of approximately 30 kHz. At this time, there is essentially no deformation produced in the mirror portion 11, and so there is essentially no change in the width of the laser beam reflected by the mirror portion 11 (the laser beam is neither narrowed nor widened). As a result, a laser beam having an essentially uniform width may be scanned by the laser scanning portion 1, causing a sharp projected image to be projected by the mobile electronic device 100.

In the first embodiment, as described above, the connecting portion 12a of the frame portion 12 and the connecting portion 13a of the frame portion 13 may both be formed on the perpendicular centerline B, and may be connected, respectively, to the end portions 11a and 11b of the mirror portion 11 on the perpendicular centerline B. Such a structure can enable the end portions 11a and 11b and the frame portions 12 and 13 to be connected at the respective locations on the perpendicular centerline B that are furthest away from the rotational axis A, thus making it possible, for example, to produce essentially no torque on the end portions 11a and 11b when compared to the case of the end portions 11a and 11b and the frame portions 12 and 13 being connected respectively on the rotational axis A. This makes it possible to effectively suppress deformation of the mirror portion 11.

Moreover, in the first embodiment, the structure may be such that the connecting bars 14 and 15 are tilted by the bending deformation of the piezoelectric elements 3b of the driving portions 16 and 17, structured so that the frame portions 12 and 13 are tilted by tilting the connecting bars 14 and 15, in a structure wherein the mirror portion 11 is angled toward the end portion 11b side from the end portion 11a side, or toward the end portion 11a side from the end portion 11b side, through tilting the frame portions 12 and 13. Unlike the case wherein the end portions 11a and 11b of the mirror portion 11 are connected directly to the connecting bars 14 and 15, in this structure the torque from the connecting bars 14 and 15 may be applied indirectly to the end portions 11a and 11b through the frame portions 12 and 13, thus making it possible to produce essentially no torque on the end portions 11a and 11b. As a result, it is possible, for example, to effectively suppress deformation of the mirror portion 11, and so there is essentially no change in the width of the laser beam reflected by the mirror portion 11 (the laser beam is neither narrowed nor widened). As a result, the laser scanning portion 1a can scan a laser beam having an essentially uniform width, enabling a sharp projected image to be projected by the mobile electronic device 100.

Unlike the case wherein ribs were formed on the mirror portion 11, in the first embodiment the thickness of the mirror portion 11 may be uniform, thus enabling the laser scanning portion 1 that has the mirror portion 11 to be fabricated easily.

Moreover, in the first embodiment, the connecting bar 14 may be connected to the bar portion 12b at a connecting part 14a located further toward the Y1 side than the Y-direction center portion located on the rotational axis A, and connected to the bar portion 13b at a connecting part 14b located further toward the Y2 side than the center portion. Moreover, the connecting bar 15 may be connected to the bar portion 12b at a connecting part 15a located further toward the Y1 side than the Y-direction center portion located on the rotational axis A, and connected to the bar portion 13b at a connecting part 15b located further toward the Y2 side than the center portion. This structure can enable the driving force around the rotational axis A to be transmitted easily from the connecting bars 14 and 15 to the frame portions 12 and 13, thus enabling more tilting of the frame portions 12 and 13 around the rotational axis A. Doing so makes it possible, for example, for more tilting of the mirror portion 11 around the rotational axis A.

Moreover, in the first embodiment, the formation of the driving portions 16 and 17 so as to hold the mirror portion 11 therebetween can enable the mirror portion 11 to be tilted with greater stability than in a case wherein only a single driving portion is provided.

Moreover, in the first embodiment, connecting the end portions 11a and 11b, which may be located on the perpendicular centerline B, to the frame portions 12 and 13 respectively can enable the mirror portion 11 to be tilted reliably around the rotational axis A.

### (Second Embodiment)

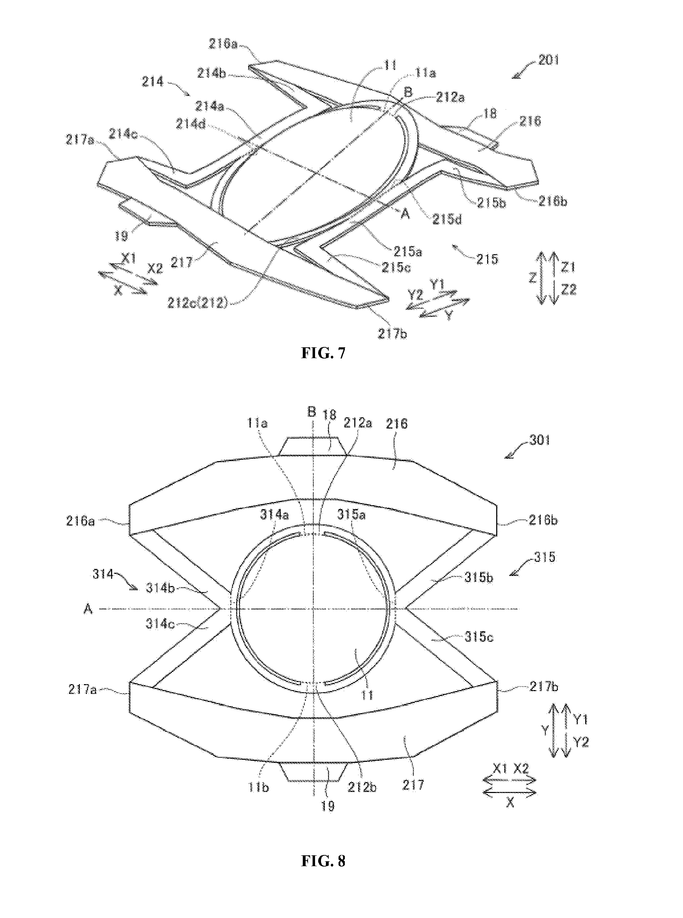

A second embodiment of the present invention will be explained next in reference to FIG. 6 and FIG. 7. Unlike the first embodiment, set forth above, wherein the frame portions 12 and 13 extended in the X direction, in the second embodiment a case will be explained wherein a frame portion 212 of a laser scanning portion 201 is formed in a ring shape so as to surround the mirror portion 11. The laser scanning portion 201 is an example of a "vibrating mirror element" according to one or more embodiments of the present invention.

The laser scanning portion 201 according to the second embodiment of the present invention, as illustrated in FIG. 6, may include: a mirror portion 11; a frame portion 212 connected to end portions 11a and 11b of the mirror portion 11; connecting bars 214 and 215 that are connected to the frame portion 212; driving portions 216 and 217 that are connected to connecting bars 214 and 215; and securing portions 18 and 19. The connecting bars 214 and 215 are an example of the "connecting portions" according to one or more embodiments of the present invention.

The frame portion 212 may be structured so as to enable tilting and so as to enable torsional deformation. Moreover, the frame portion 212 may have a connecting portion 212a connected to an end portion 11a on the Y1 side of the mirror portion 11, a connecting portion 212b connected to an end portion 11b on the Y2 side of the mirror portion 11, and a frame portion main unit 212c. The connecting portions 212a and 212b may both be formed on the perpendicular centerline B perpendicular to the rotational axis A, and may be respectively connected to the end portions 11a and 11b on the mirror portion 11 on the perpendicular centerline B. Moreover, the frame portion main unit 212c may be formed in a ring shape, in the plan view, so as to surround the periphery of the circular mirror portion 11, and so as to have a uniform width.

The connecting bars 214 and 215 may be formed respectively on the X1 side and the X2 side of the mirror portion 11, formed so as to hold the mirror portion 11 therebetween. The connecting bars 214 and 215 may each be formed in U shapes, in the plan view, having the opening at the sides that are opposite from the mirror portion 11 (the X1 side and the X2 side).

Moreover, the connecting bar 214 may have a first bar portion 214a that extends in a straight line along the Y direction, a second bar portion 214b that connects to the end portion of the first bar portion 214a on the Y1 side and that extends in a line toward the side (the X1 side) opposite from the mirror portion 11, and a third bar portion 214c connected to the end portion of the first bar portion 214a on the Y2 side, and that extends in a line toward the X1 side. Moreover, the connecting bar 215 may have a first bar portion 215a that extends in a straight line along the Y direction, a second bar portion 215b that connects to the end portion of the first bar portion 215a on the Y1 side and that extends in a line toward the side (the X2 side) opposite from the mirror portion 11, and a third bar portion 215c connected to the end portion of the first bar portion 215a on the Y2 side, and that extends in a line toward the X2 side.

Moreover, the first bar portion 214a of the connecting bar 214 may be connected to the end portion of the frame portion 212 on the X1 side at the connecting part 214d positioned on the rotational axis A, and the first bar portion 215a of the connecting bar 215 may be connected to the end portion of the frame portion 212 on the X2 side at the connecting part 215d positioned on the rotational axis A. The connecting part 214d may be formed on the side face of the mirror portion 11 side (the X2 side) of the connecting bar 214, and the connecting part 215d may be formed on the side face of the mirror portion 11 side (the X1 side) of the connecting bar 215.

Moreover, the connecting bar 214 on the X1 side may be connected to the side face in the vicinity of the end portion 216a of the driving portion 216 on the Y1 side, at the end portion of the second bar portion 214b on the X1 side, and may be connected to the side face in the vicinity of the end portion 217a of the driving portion 217 on the Y2 side at the end portion of the third bar portion 214c on the X1 side. Moreover, the connecting bar 215 on the X2 side may be connected to the side face in the vicinity of the end portion 216b of the driving portion 216, at the end portion of the second bar portion 215b on the X2 side, and may be connected to the side face in the vicinity of the end portion 217b of the driving portion 217 at the end portion of the third bar portion 215c on the X2 side. As a result, the driving portions 216 and 217 may be connected together through the connecting bar 214 on the X1 side, and connected together by the connecting bar 215 on the X2 side. The end portions 216a and 217a are an example of "one end portion" according to one or more embodiments of the present invention, and the end portions 216b and 217b are an example of the "other end portion" according to one or more embodiments of the present invention.

Moreover, the driving portion 216 of the Y1 side may be formed so as to be arched or bent, in the plan view, so as to be concave on the mirror portion 11 side (the Y2 side), and the driving portion 217 of the Y2 side may be formed so as to be arched or bent, in the plan view, so as to be concave on the mirror portion 11 side (the Y1 side). The other structures in the second embodiment of the present invention may be identical to those in the first embodiment, set forth above.

In the reciprocating action of the mirror portion 11 in the laser scanning portion 201 in the second embodiment, as illustrated in FIG. 7, when the driving portion 216 on the Y1 side deforms to bend in the concave direction, and the driving portion 217 on the Y2 side deforms to bend in the convex direction, the end portions 216a and 216b of the driving portion 216 on the Y1 side may both be dislocated upward (toward the Z1 side), and the end portions 217a and 217b of the driving portion 217 on the Y2 side may both be dislocated downward (toward the Z2 side). As a result, in the connecting bar 214 on the X1 side, the first bar portion 214a may tilt downward from the Y1 side toward the Y2 side so that the second bar portion 214b will be located higher than the third bar portion 214c. Similarly, in the connecting bar 215 on the X2 side, the first bar portion 215a may tilt downward from the Y1 side toward the Y2 side so that the second bar portion 215b will be located higher than the third bar portion 215c.

Given this, tilting the first bar portions 214a and 215a downward from the Y1 side towards the Y2 side can cause a torque to be applied by the first bar portions 214a and 215a in the torsional direction to the frame portion main unit 212c of the frame portion 212, which may be connected on the rotational axis A. This causes the frame portion main unit 212c to undergo torsional deformation along with tilting so that the Y1 side will be higher than the Y2 side on a perpendicular axis B.

Here, in the second embodiment, although there is a large torsional deformation, due to the torque from the first bar portions 214a and 215a, by the frame portion main unit 212c in the vicinity of the first bar portions 214a and 215a, there is essentially no torsional deformation at the connecting portions 212a and 212b of the frame portion 212 (referencing FIG. 6) that are positioned the furthest away on the rotational axis A. As a result, there is essentially no torque that would cause deformation of the mirror portion 11. The result is that, due to tilting the frame portion 212, the mirror portion 11 tilts around the rotational axis A so as to angle downward from the end portion 11a side toward the end portion 11b side, positioned on the perpendicular centerline B of the mirror portion 11. The other reciprocating actions in the second embodiment of the present invention may be identical to those in the first embodiment, set forth above.

In the second embodiment, as described above, the connecting portions 212a and 212b of the frame portion 212 of the frame portion 212 may both be formed on the perpendicular centerline B, and are connected, respectively, to the end portions 11a and 11b of the mirror portion 11 on the perpendicular centerline B, thus enabling there to be essentially no torque produced on the end portions 11a and 11b, thus making it possible, for example, to suppress effectively deformation of the mirror portion 11.

Moreover, in the second embodiment the first bar portion 214a of the connecting bar 214 may be connected to the end portion of the frame portion 212 on the X1 side at the connecting part 214d positioned on the rotational axis A, and the first bar portion 215a of the connecting bar 215 may be connected to the end portion of the frame portion 212 on the X2 side at the connecting part 215d positioned on the rotational axis A. This structure can enable the driving force around the rotational axis A to be transmitted easily from the connecting bars 214 and 215 to the frame portion 212, thus enabling more tilting of the frame portion 212 around the rotational axis A. Doing so makes it possible to increase tilting the mirror portion 11 around the rotational axis A.

Moreover, in the second embodiment, the frame portion 212 may be formed in a ring shape, in the plan view, so as to surround the periphery of the circular mirror portion 11, to thereby enable the end portions 11a and 11b of the circular mirror portion 11 to be connected easily to the frame 212.

Moreover, in the second embodiment, the driving portion 216 may be formed so as to be arched or bent, in the plan view, so as to be concave on the mirror portion 11 side (the Y2 side), and the driving portion 217 may be formed so as to be arched or bent, in the plan view, so as to be concave on the mirror portion 11 side (the Y1 side), enabling the formation of the driving portions 216 and 217 near to the mirror portion 11, thus making it possible, for example, to keep the laser scanning portion 201 from being large.

Moreover, in the second embodiment, when compared to the case wherein the driving portions 216 and 217 may be formed in a straight line, arcing or bending the driving portions 216 and 217 can increase the length of the driving portions 216 and 217 by the amount by which the driving portions 216 and 217 are arched or bent, thus enabling the area of the driving portions 216 and 217 to be made larger. Doing so makes it easy to increase the driving force produced by the driving portions 216 and 217. The other effects in the second embodiment of the present invention may be identical to those in the first embodiment, set forth above.

### (Modified Example of the Second Embodiment)

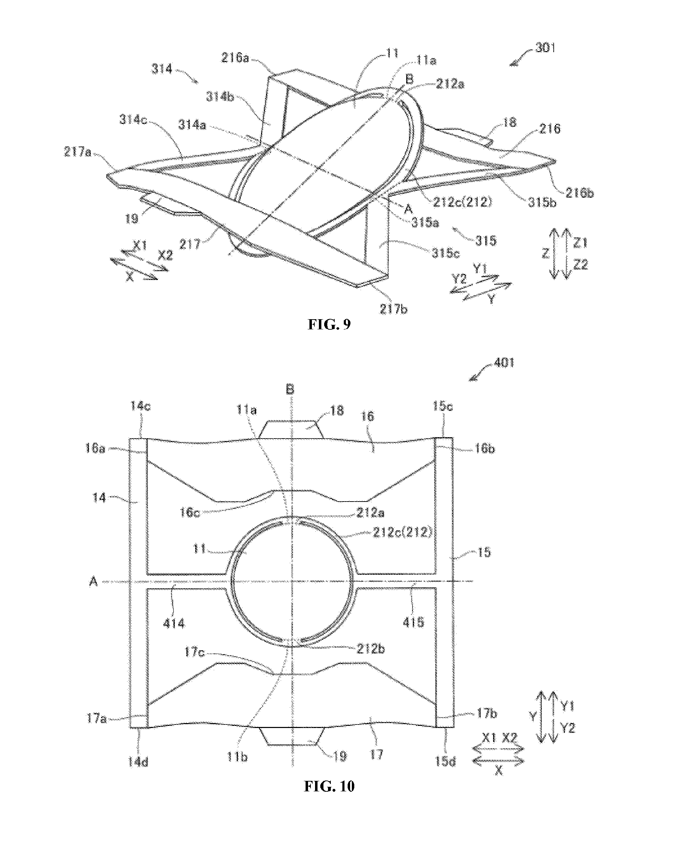

A modified example of the second embodiment of the present invention will be explained next in reference to FIG. 8 and FIG. 9. Unlike the connecting bars 214 and 215 of the second embodiment, set forth above, which may be formed in U shapes, in the modified example of the second embodiment a case will be explained wherein the connecting bars 314 and 315 may be formed in V shapes. The connecting bars 314 and 315 are an example of the "connecting portions" according to one or more embodiments of the present invention.

In a laser scanning portion 301 according to the modified example of the second embodiment of the present invention, as illustrated in FIG. 8, the connecting bars 314 and 315 may each be formed in V shapes, in the plan view, having the opening at the sides that are opposite from the mirror portion 11 (the X1 side and the X2 side). The laser scanning portion 301 is an example of a "vibrating mirror element" according to one or more embodiments of the present invention.

Moreover, the connecting bar 314 may be connected to the end portion of the frame portion 212 on the X1 side at the connecting part 314a positioned on the rotational axis A, and the connecting bar 315 may be connected to the end portion of the frame portion 212 on the X2 side at the connecting part 315 a positioned on the rotational axis A.

Moreover, the connecting bar 314 has a first bar portion 314b that may extend in a diagonal direction so as to connect to the connecting part 314a in the vicinity of the end portion 216a of the driving portion 216 on the Y1 side, and a second bar portion 314c that may extend in a diagonal direction so as to connect to the connecting part 314a in the vicinity of the end portion 217a of the driving portion 217 on the Y2 side. Moreover, the connecting bar 315 has a first bar portion 315b that may extend in a diagonal direction so as to connect to the connecting part 315a in the vicinity of the end portion 216b of the driving portion 216 on the Y1 side, and a second bar portion 315c that may extend in a diagonal direction so as to connect to the connecting part 315a in the vicinity of the end portion 217b of the driving portion 217 on the Y2 side. As a result, the driving portions 216 and 217 may be connected together through the connecting bar 314 on the X1 side, and connected together by the connecting bar 315 on the X2 side. The other structures in the modified example of the second embodiment of the present invention may be identical to those in the second embodiment, set forth above.

Moreover, in the reciprocating action of the mirror portion 11 in the laser scanning portion 201 in the modified example of the second embodiment, as illustrated in FIG. 9, when the driving portion 216 on the Y1 side deforms to bend in the concave direction and the driving portion 217 on the Y2 side may deform to bend in the convex direction, the connecting bar 314 on the X1 side may angle downward from the Y1 side toward the Y2 side so that the first bar portion 314b will be higher than the second bar portion 314c. Similarly, in the connecting bar 315 on the X2 side, the first bar portion 315b may be angled downward from the Y1 side toward the Y2 side so that the first bar portion 315b will be located higher than the second bar portion 315c. The other reciprocating actions and effects in the modified example of the second embodiment of the present invention may be identical to those in the second embodiment, set forth above.

### (Third Embodiment)

A third embodiment of the present invention will be explained next in reference to FIG. 10. Unlike the first embodiment set forth above, in the third embodiment a torsion bar 414 may be provided between the frame portion 212 and the connecting bar 14, and a torsion bar 415 may be provided between the frame portion 212 and the connecting bar 15. The torsion bars 414 and 415 are an example of a "connecting portion" according to one or more embodiments of the present invention.

In the laser scanning portion 401 according to the third embodiment of the present invention, unlike the frame portions 12 and 13 in the first embodiment set forth above, a circular frame portion 212 may be formed in the second embodiment, set forth above. The laser scanning portion 401 is an example of a "vibrating mirror element" according to one or more embodiments of the present invention.

Here, in the laser scanning portion 401 according to the third embodiment, torsion bars 414 and 415, which can undergo torsional deformation, may be provided. Because the torsion bars 414 and 415 may be formed respectively on the X1 side and the X2 side, they may be formed so that the mirror portion 11 is held therebetween. Moreover, the X1 side torsion bar 414 may be formed extending in the X direction on the rotational axis A so as to connect to the frame portion 212 and the X1 side connecting bar 14. Moreover, the X2 side torsion bar 415 may be formed extending in the X direction on the rotational axis A so as to connect to the frame portion 212 and the X2 side connecting bar 15. As a result, the structure may be such that the torsion bars 414 and 415 are not only both connected to the frame portion 212 on the rotational axis A, but are also connected to the connecting bars 14 and 15, respectively.

Moreover, the reciprocating action of the mirror portion 11 in the laser scanning portion 401 in the third embodiment, when the Y1 side driving portion 16 and the Y2 side driving portion 17 undergo bend deformation, the connecting bars 14 and 15 may tilt, in the same manner as in the first embodiment, described above. As a result, the torsion bars 414 and 415 may apply torques in a torsional direction through the connecting bars 14 and 15, respectively. The result is that the torsion bars 414 and 415 undergo torsional deformation, and the frame portion main unit 212c of the frame portion 212 may both be tilted and undergo torsional deformation. The other reciprocating actions in the third embodiment of the present invention may be identical to those in the second embodiment, set forth above.

In the third embodiment, as described above, the connecting portions 212a and 212b of the frame portion 212 of the frame portion 212 may be both formed on the perpendicular centerline B, and may be connected, respectively, to the end portions 11a and 11b of the mirror portion 11 on the perpendicular centerline B, thus enabling there to be essentially no torque produced on the end portions 11a and 11b, thus making it possible, for example, to suppress effectively deformation of the mirror portion 11.

Moreover, in the third embodiment the torsion bars 414 and 415, which are able to undergo torsional deformation, may be formed so as to hold the mirror portion 11 therebetween, and may be formed so as to extend in the X direction on the rotational axis A. Moreover, the torsion bars 414 and 415 may be structured so as to undergo torsional deformation through tilting the connecting bars 14 and 15, and the frame portion 212 may be structured so as to both tilt and undergo torsional deformation through the torsional deformation of the torsion bars 414 and 415. Given this structure, the torsional deformation of the torsion bars 414 and 415 can enable an increase in tilting the frame portion 212 around the rotational axis A, thus enabling an increase in tilting the mirror portion 11 around the rotational axis A. The other effects in the third embodiment of the present invention may be identical to those in the first embodiment, set forth above.

The embodiments disclosed herein should be considered to be illustrative, rather than constraining, in all points. The scope of the present invention is defined by the Scope of Patent Claims, rather than by the explanation of the embodiments set forth above, and also includes all meanings that are equivalent to those in the Scope of Patent Claims, and includes all modifications within said Scope.

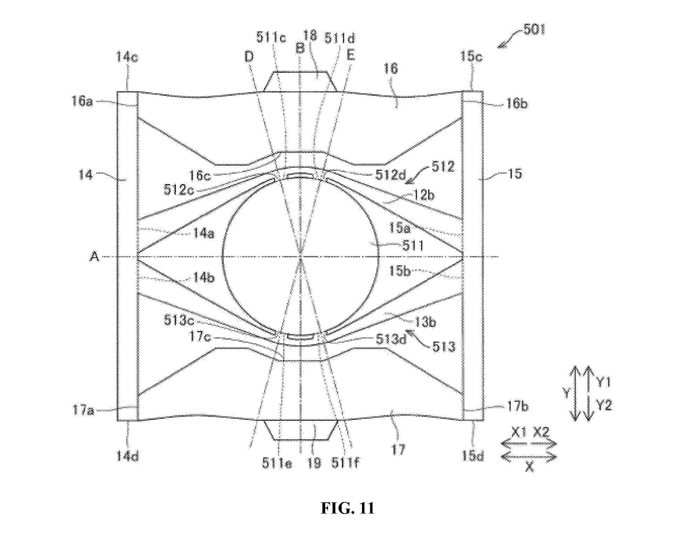

For example, while examples wherein the mirror portion and the frame portion were connected on the perpendicular centerline B were presented in the first through third embodiments, described above, the present invention is not limited thereto. For example, as with the laser scanning portion 501 in the modified example of the first embodiment, illustrated in FIG. 11, the end portion 511c and the connecting portion 512c of the frame portion 512 may be connected on an intersecting line D of the mirror portion 511, and the end portion 511d and the connecting portion 512d of the frame portion 512 may be connected on an intersecting line E of the mirror portion 511. Moreover, an end portion 511e and a connecting portion 513c of a frame portion 513 may be connected on an intersecting line E of the mirror portion 511, and an end portion 511f and a connecting portion 513d of the frame portion 513 may be connected on an intersecting line D of the mirror portion 511. The intersecting lines D and E may both extend in directions that intersect with the rotational axis A and the perpendicular centerline B. Additionally, the connecting portion 512c and the connecting portion 512d may both be formed so as to be essentially linearly symmetrical in respect to the perpendicular centerline B, and the connecting portion 513c and the connecting portion 513d may both be formed so as to be essentially linearly symmetrical in respect to the perpendicular centerline B. This makes it possible to tilt the mirror portion 511 with stability. The laser scanning portion 501 is an example of a "vibrating mirror element" according to one or more embodiments of the present invention, and the end portions 511c, 511d, 511e, and 511f are examples of "mirror end portions" according to one or more embodiments of the present invention. Moreover, in one or more embodiments of the present invention, a mirror end portion of the mirror portion may be connected to the frame portion at least one location located on an intersecting line that intersects with the rotational axis.

Moreover, while examples wherein the connecting bars (connecting portions) and the driving portions were both provided in pairs so as to hold the mirror portion 11 therebetween were presented in the first through third embodiments set forth above, the present invention is not limited thereto. In the present invention, a single connecting portion and single driving portion may be provided.

Moreover, while an example wherein the laser beam was scanned in one axial direction was presented in the first embodiment, set forth above, the present invention is not limited thereto. In the present invention, the structure may be one wherein the laser beam is scanned in two axial directions by providing, on the outside of the laser scanning portion, an external driving portion for tilting the laser scanning portion around a perpendicular axis perpendicular to the rotational axis.

Moreover, while an example wherein the mirror portion 11 is circular, in the plan view, was presented in the first through third embodiments, set forth above, the present invention is not limited thereto. In the present invention, the mirror portion may be elliptical or a square shape, for example in the plan view. Furthermore, those of ordinary skill in the art would appreciate that certain "units" or "portions" of one or more embodiments of the present invention may be implemented by a circuit, processor, etc. using known methods.

### [Explanation of Reference Numerals]

1, 201, 301, 401, 501: Laser Scanning Portions (Vibrating Mirror Elements)
3b: Piezoelectric element
11, 511: Mirror Portions
11a, 11b, 511 c, 511d, 511e, 511f: End Portions (Mirror End Portions)
12, 13, 212, 512, 513: Frame Portions
14, 15, 214, 215, 314, 315: Connecting Bars (Connecting Portions)
16, 17, 216, 217: Driving Portions
16a, 17a, 216a, 217a: End Portions (First End Portions)
16b, 17b, 216b, 217b: End Portions (Second End Portions)
100: Mobile Electronic Device (Electronic Device with Projector Function)
102: Controlling Portion
104: Red Laser Diode (Laser Beam Producing Portion)
105: Green Laser Diode (Laser Beam Producing Portion)
106: Blue Laser Diode (Laser Beam Producing Portion)
414, 415: Torsion Bars (Connecting Portions)
A: Rotational Axis
B: Perpendicular Centerline (Intersecting Line)
D, E: Intersecting Lines

## Claims

1. A vibrating mirror element (1; 201; 301; 401; 501) comprising:
a mirror portion (11; 511) that reflects light and is tiltable around a rotational axis (A);
a tiltable frame portion (12, 13; 212; 512, 513) connected to a mirror end portion (11a, 11b; 511c, 511d, 511e, 511f) of the mirror portion (11; 511) at a position on an intersecting line (B; D, E) that intersects with the rotational axis (A);
a driving portion (16, 17; 216, 217) including a piezoelectric element (3b) configured to deform through application of a voltage; and
a connecting portion (14, 15; 214, 215; 314, 315) configured to connect the tiltable frame portion (12, 13; 212; 512, 513) and the driving portion (16, 17; 216, 217) and tiltable through deformation of the piezoelectric element (3b) of the driving portion (16, 17; 216, 217), wherein:
the tiltable frame portion (12, 13; 212; 512, 513) is configured to be tilted by tilting the connecting portion, and
the mirror portion (11; 511) is configured to be tilted by tilting the tiltable frame portion (12, 13; 212; 512, 513).

2. The vibrating mirror element (1; 201; 301; 401; 501) of claim 1, wherein:
the tiltable frame portion (12, 13; 212; 512, 513) is connected to the mirror end portion (11a, 11b; 511c, 511d, 511e, 511f) at a location near a centerline (B) that intersects perpendicularly with the rotational axis (A) of the mirror portion (11; 511).

3. The vibrating mirror element (1; 201; 301; 401; 501) of claim 1 or claim 2, wherein:
the connecting portion (14, 15; 214, 215; 314, 315) is connected to the tiltable frame portion (12, 13; 212; 512, 513) near the rotational axis (A).

4. The vibrating mirror element (1; 201; 301; 401; 501) of any of claims 1-3, wherein:
the tiltable frame portion (12, 13; 212; 512, 513) is formed so as to surround a periphery of the mirror portion (11; 511).

5. The vibrating mirror element (1; 201; 301; 401; 501) of any of claims 1-4, wherein:
the mirror portion (11; 511) is formed in a circular shape in a plan view, and
the tiltable frame portion (12, 13; 212; 512, 513) is formed in a ring shape in the plan view so as to encompass the periphery of the mirror portion (11; 511).

6. The vibrating mirror element (1; 201; 301; 401; 501) of any of claims 1-5, wherein:
the driving portion (16, 17; 216, 217) comprises a pair of driving portions (16, 17; 216, 217) holding the mirror portion (11; 511) therebetween,
the connecting portion (14, 15; 214, 215; 314, 315) is configured to connect together first end portions (16a, 17a; 216a, 217a) of the pair of driving portions (16, 17; 216, 217) and to connect together second end portions (16b 17b; 216b, 217b) of the pair of driving portions (16, 17; 216, 217), and includes a pair of connecting bars (14, 15; 214, 215; 314, 315) tiltable by deformation of the pair of driving portions (16, 17; 216, 217),
the tiltable frame portion (12, 13; 212; 512, 513) is configured to connect to each of a pair of the mirror end portions (11a, 11b; 511e, 511d, 511e, 511f) of the mirror portion (11; 511) located on a perpendicular centerline (B) intersecting perpendicularly with the rotational axis (A) of the mirror portion (11; 511), and is configured to be tilted by tilting the pair of connecting bars (14, 15; 214, 215; 314, 315), and
the mirror portion (11; 511) is configured to be tilted by tilting the tiltable frame portion (12, 13; 212; 512, 513).

7. The vibrating mirror element (1; 201; 301; 401; 501) of any of claims 1-6, wherein the tiltable frame portion (12, 13; 512, 513) comprises a pair of frame portions (12, 13; 512, 513) connected respectively to end portions (11a, 11b; 511c, 511d, 511e, 511f) of the mirror portion (11; 511).

8. The vibrating mirror element (401) of claim 6, wherein:
the connecting portion (14, 15) further includes a pair of torsion bars (414, 415) holding the mirror portion (11) therebetween and capable of undergoing torsional deformation through tilting the pair of connecting bars (14, 15), and
the pair of torsion bars (414, 415) is configured to lie on the rotational axis (A) and so that the tiltable frame portion (212) is tiltable through torsional deformation of the pair of torsion bars (414, 415).

9. The vibrating mirror element (201) of any of claims 1-8, wherein:
the driving portion (216) is arched or bent, in a plan view, so that the mirror portion (11) side is concave.

10. The vibrating mirror element (1; 201; 301; 401; 501) of any of claims 1-9, wherein:
the mirror portion (11; 511) comprises a mirror;
the tiltable frame portion (12, 13; 212; 512, 513) comprises a tiltable frame;
the driving portion (16, 17; 216, 217) comprises a driving circuit including the piezoelectric element (3b); and
the connecting portion (14, 15; 214, 215; 314, 315) comprises a connector.

11. An electronic device (100) having a projector function, comprising:
a laser beam producing portion (104, 105, 106);
a controlling portion (102) configured to analyze an inputted video to recognize pixel information; and
a vibrating mirror element (1; 201; 301; 401; 501) of any of claims 1-10 configured to scan the laser beam.

12. The electronic device (100) of claim 11, wherein:
the laser beam producing portion (104, 105, 106) comprises a laser; and
the controlling portion (102) comprises a controlling circuit.
